# EUROPEAN PATENT APPLICATION

(11) **EP 1 587 132 A2**
(43) Date of publication of application: **19.10.2005**
(21) Application number: 05005976.5
(22) Date of filing: 18.03.2005
(51) Int. Cl.: H01J 61/44, C09K 11/77, C09K 11/66

(54) **Fluorescent lamp for emitting visible radiation**

(30) Priority: 25.03.2004 JP 2004089754
(71) Applicant: NEC CORPORATION, Minato-ku, Tokyo 108-8001 (JP)
(72) Inventor: Nomura, Koji, Shinagawa-ku Tokyo 141-0031 (JP); Yamamura, Shyuji, Shinagawa-ku Tokyo 141-0031 (JP)
(74) Representative: Vossius & Partner

(57) **Abstract**

A fluorescent lamp is adapted to have an arc tube encapsulated in a glass glove. For the arc tube, an ultraviolet radiation emitting lamp that provides a wavelength equal to or longer than 253.7 nm is employed, and phosphor, composed of calcium halophosphate phosphor and three wavelength phosphors, is applied to the inner surface of the glass glove. Exciting this phosphor by ultraviolet radiation provided from the arc tube causes visible radiation to be emitted.

## Description

The present invention relates to a fluorescent lamp having an arc tube encapsulated in a glass grove and particularly to a fluorescent lamp adapted to emit visible radiation created by the excitation of a phosphor layer formed on an inner surface of the glass glove by the ultraviolet radiation generated in the arc tube.

Conventionally, a commonly used fluorescent lamp has been structured such that a phosphor layer is formed on an internal surface of a glass tube and mercury and rare gas are encapsulated in this glass tube to cause an electric discharge in the glass tube, the discharge generating ultraviolet radiation (UV), which excites the phosphor layer, and the excitation of the phosphors causes the creation of visible radiation.

While this glass-tube fluorescent lamp has ordinarily had a shape of a straight or a circular tube, the fluorescent lamp that allows direct screw-in into a socket for an incandescent bulb has recently been commercialized to achieve size reduction and energy saving.

The above-described conventional fluorescent lamp is employed as an arc tube in a specific structure as well, for example, a spiral tube structure formed by spirally winding a straight fluorescent lamp, a twin tube structure composed of two straight tubes arranged in parallel, a U-shaped tube structure formed by bending a straight tube into a U-shape. The fluorescent lamp having a structure that accommodates the above arc tube together with a lighting circuit in a glass glove has been commercialized as a typical structure. The conventional fluorescent lamp is configured to have a structure provided with an arc tube having at least one of the above shapes.

In this regard, the above-described conventional fluorescent lamp employed has had an optical radiation diffusion layer formed of white pigment applied to the inner surface of the glass glove to diffuse an optical radiation output of the arc tube uniformly, as described, for example, in Japanese Patent Laid-open publication No. 269813/98.

The fluorescent lamp using a glass glove with white pigment applied to its inner surface is affected by a minute quantity of the ultraviolet radiation radiated from the arc tube incorporated in the glass glove while the lamp is lighted. As a result, a problem encountered has been that the optical diffusion layer of white pigment deteriorates due to aging, causing reduction in the illuminance and degradation of the appearance quality.

Furthermore, there has been a problem that the temperature difference between the temperature inside the glass glove when the lamp is tuned on or off, and the ambient temperature permits the moisture in the ambience to penetrate into the glass grove, causing deterioration of the white pigment.

Whatever the case may be, although the use of the white pigment is imperative for making the optical diffusion uniform, it, in fact, interrupts the optical radiation output.

The present invention has been made to solve the above problems and is intended to provide a fluorescent lamp capable of achieving an efficient generation of luminescence without using white pigment and also without reducing the optical radiation output to the level lower than the conventional fluorescent lamp.

The present invention is directed to a fluorescent lamp adapted to have an arc tube encapsulated in a glass glove, wherein a UV lamp that provides the wavelength equal to or longer than 253.7 nm is employed for the arc tube, and the phosphor composed of calcium halophosphate phosphor and three wavelength phosphors is applied to the inner surface of said glass glove. Exciting this phosphor by the ultraviolet radiation provided from the arc tube causes emission of visible radiation.

According to one aspect of the present invention, the phosphor to be applied to the inner surface of the glass glove includes at least one of the phosphor Y₂O₃:Eu or 3.5MgO-0.5MgF-GeO₂:Mn for red luminescence, the phosphor LaPO₄:Ce, Tb for green luminescence, and the phosphor BaMg₂Al₁₆O₂₇:Eu, (Mn) or (Sr, Ca, Ba)₅(PO₄)₃Cl: Eu for blue luminescence. The applied weight of the phosphors can be 2 mg to 20 mg per 1 cm².

Further, the glass tube material of which said arc tube is made can be vitreous silica. In addition, the arc tube can have any one of following shapes, spiral, twin, U-shape, etc.. The glass glove can encapsulate rare gas, for example, Ne, Ar, etc. therein or the interior of the glass glove can have a vacuum.

The present invention avoids employing the white pigment on the inner surface of the glass glove, which has heretofore interrupted an optical radiation output, and instead, applies the phosphor to the inner surface of the glass glove, which radiates visible radiation generated by ultraviolet excitation. As opposed to the prior art, in which the arc tube provides optical radiation output, the present invention is intended to replace the arc tube with a UV lamp; form a phosphor layer on the inner surface itself of the glass glove; and generate an optical radiation output from this phosphor layer. Thus, the present invention enables efficient luminescence generation without lowering the optical radiation output as compared to the conventional fluorescent lamp.

The above and other objects, features and advantages of the present invention will become apparent from the following description with reference to the accompanying drawings, which illustrate examples of the present invention.
Fig. 1 is a diagram to illustrate the structure of the fluorescent lamp according to the present invention;
Fig. 2A is an appearance diagram illustrating an example of the structure of the arc tube accommodated in the fluorescent lamp of the present invention;
Fig. 2B is an appearance diagram illustrating an example of the structure of the arc tube accommodated in the fluorescent lamp of the present invention; and
Fig. 2C is an appearance diagram illustrating an example of the structure of the arc tube accommodated in the fluorescent lamp of the present invention.

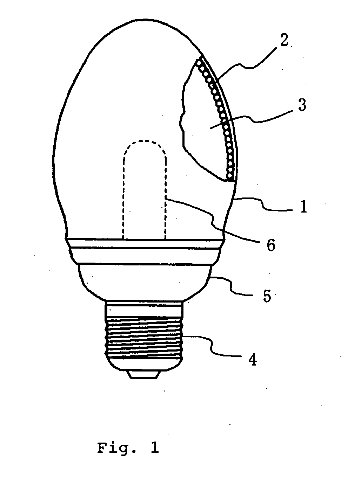

As shown in Fig. 1, the fluorescent lamp of the present invention has glass glove 1, arc tube 6, metal cap 4 and cover 5. Rare gas 3 is encapsulated in glass glove 1 of a sealed structure, arc tube 6 is enclosed by glass glove 1 over which is fitted cover 5 having metal cap 4. Metal cap 4 is of a screw type (screw cap 4) and can be removably fit into a socket of an ordinary incandescent lamp.

A lighting circuit (not shown) is incorporated in cover 5 having screw cap 4, and arc tube 6 for generating ultraviolet radiation is disposed in a region surrounded by glass glove 1. Further, phosphors 2 is applied to the inner surface of glass glove 1 so that phosphors 2 can be excited by the ultraviolet radiation coming from arc tube 6. The generation of visible radiation is caused in phosphors 2 by this ultraviolet excitation. In glass glove 1, there is encapsulated rare gas 3 such as Ne, Ar or Kr, or there is established a vacuum state to obviate the interruption of the ultraviolet radiation. The reason for this is to protect the phosphor layer and to block the absorption of the ultraviolet radiation.

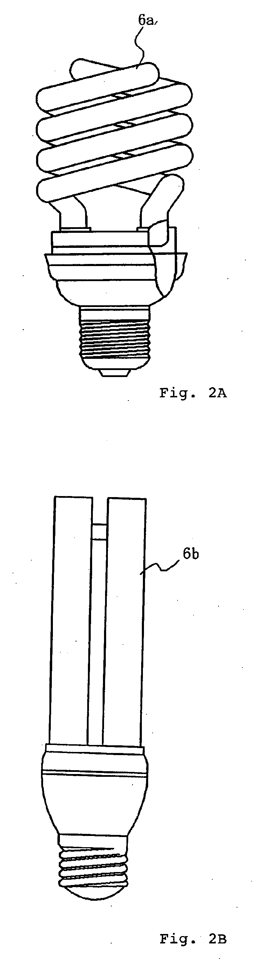

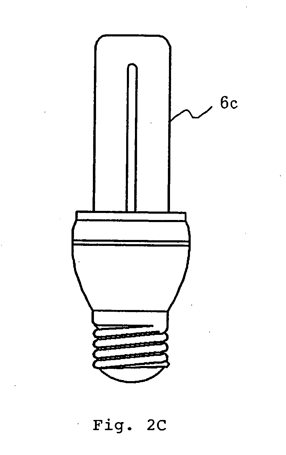

A mercury vapor discharge tube is employed for arc tube 6, the shape of which has a similar configuration such that a conventional straight fluorescent lamp is transformed as shown in Figs. 2A, 2B and Fig. 2C. Specifically, in regard to the shapes of fluorescent lamps, there have been, for example, spiral arc tube 6a formed by spirally winding a straight tube, twin arc tube 6b configured by arranging two straight tubes in parallel and U-shaped arc tube 6c formed by bending a straight tube into the U-shape, at least one of which is employed. The reason for the fact that the shape of the arc tube is configured just like the shape of the conventional fluorescent lamp is that the conventional fluorescent lamp already delivers good, actual performance with a shape that efficiently provides visible radiation, and therefore it decided that using the conventional fluorescent lamp as a UV arc tube will allow employment of this useful capability.

Further, as glass tube material for arc tube 6, it is preferred to use material that efficiently transmits ultraviolet radiation (UV), i.e., vitreous silica. Arc tube 6 employed is a UV output lamp that radiates radiation having a wavelength no shorter than that of a sterilization lamp that provides wavelength that is no shorter than 253.7 nm. The reason for this is that the vitreous silica is a material capable of cutting off the ultraviolet radiation of short wavelengths no longer than 253.7 nm, and short-wavelength ultraviolet radiation produces only a small amount of the light flux of the visible radiation from the phosphors.

Next, phosphor 2 applied to the inner surface of glass glove 1 is formed of phosphor that generates visible radiation through excitation by ultraviolet radiation. The composition of the phosphor is calcium halophosphate phosphor Ca₁₀(PO₄)₃FCl: Sb, Mn and rare earth phosphor. The rare earth phosphor is composed of at least one of the three wavelength phosphors: the phosphor for red luminescence Y₂O₃:Eu or 3.5MgO-0.5MgF-GeO₂:Mn, the phosphor for green luminescence LaPO₄:Ce, Tb, and the phosphor for blue luminescence BaMg₂Al₁₆O₂₇:Eu, (Mn) or (Sr, Ca, Ba)₅(PO₄)₃Cl: Eu.

In the present embodiment, the applied weight of the three wavelength phosphors and the calcium halophosphate phosphor applied to the inner surface of this glass glove 1 is prescribed to be 2 mg to 20 mg per 1 cm². By forming the phosphor layer so as to have the range of the above applied weight and to produce visible radiation by means of the ultraviolet excitation, efficient luminescence-radiation is enabled without lowering the light output to the level lower than that of the conventional fluorescent lamp.

The relationship between the applied weight and visible radiation output of this phosphor has been obtained by the following experiment: first, preparing glass gloves having phosphors that are applied so as to have applied weights changed in stages; fitting covers with respective glass gloves to incorporate UV arc tubes; measuring values of the light flux (lm) of visible radiation produced by the ultraviolet excitation and radiated from respective glass gloves for respective applied weights; deciding, from the measured results, on the range of the applied weight that allows providing stable light outputs equivalent to or more than those of conventional fluorescent lamps; and, based on the areas of the inner surfaces of the glass gloves calculated in advance, determining the applied weights per unit area.

The above described shape of the glass glove used for the fluorescent lamp according to the present invention can be in the shape of an electric bulb as a matter of course, circular cylindrical, polygonal cylindrical and oval, and similar effects can be obtained no matter how the glass glove may be shaped.

According to the present invention, the phosphor layer on an inner surface of the glass glove is excited by the long-wavelength ultraviolet radiation radiated from the arc tube and visible radiation is yielded. Because the visible radiation is uniformly radiated from the transparent glass glove to the outside, the fluorescent lamp of the present invention can be used for general lighting.

While preferred embodiments of the present invention have been described using specific terms, such description is for illustrative purposes only, and it is to be understood that changes and variations may be made without departing from the spirit or scope of the following claims.

## Claims

1. A fluorescent lamp having an arc tube encapsulated in a glass glove,
wherein said arc tube includes a ultraviolet radiation emitting lamp, and phosphor, composed of calcium halophosphate phosphor and three wavelength phosphors, is applied to an inner surface of said glass glove.

2. A fluorescent lamp according to claim 1, wherein said phosphor applied to the inner surface of said glass glove includes at least one of the phosphors Y₂O₃:Eu or 3.5MgO-0.5MgF-GeO₂:Mn for red luminescence, the phosphor LaPO₄:Ce, Tb for green luminescence, and the phosphor BaMg₂Al₁₆O₂₇:Eu, (Mn) or (Sr, Ca, Ba)₅(PO₄)₃Cl: Eu for blue luminescence.

3. A fluorescent lamp according to claim 1 or 2, wherein an applied weight of said phosphor is 2 mg to 20 mg per 1 cm².

4. A fluorescent lamp according to claim 1, 2 or 3, wherein a glass tube material of which said arc tube is made, is vitreous silica.

5. A fluorescent lamp according to claim 1, 2, 3 or 4, wherein said arc tube has any one of following shapes, spiral, twin and U-shape.

6. A fluorescent lamp according to claim 1, 2, 3, 4 or 5, wherein either rare gas is encapsulated in said glass glove or an interior of said glass glove is placed in a vacuum state.
